# EUROPÄISCHE PATENTSCHRIFT

(11) **EP 4 151 825 B1**
(45) Veröffentlichungstag und Bekanntmachung des Hinweises auf die Patenterteilung: **15.05.2024**
(21) Anmeldenummer: 22195802.8
(22) Anmeldetag: 15.09.2022
(51) Int. Cl.: E21B 17/03, B25D 17/00

(54) **SCHNELLVERSCHLUSS FÜR DREHENDE UND GLEICHZEITIG SCHLAGENDE WERKZEUGE**
QUICK RELEASE FOR ROTATING AND SIMULTANEOUSLY STRIKING TOOLS
FERMETURE RAPIDE POUR LES OUTILS QUI TOURNENT ET FRAPPENT EN MÊME TEMPS

(30) Priorität: 15.09.2021 CH 0702712021
(43) Veröffentlichungstag der Anmeldung: 22.03.2023
(73) Patentinhaber: Stumatec AG, 3635 Uebeschi (CH)
(72) Erfinder: STUDER, Daniel, 3631 Höfen (CH)
(74) Vertreter: Felber, Josef

(56) Entgegenhaltungen:
- DE-A1- 19 638 464
- DE-A1- 19 717 498
- JP-A- 2000 356 083
- JP-U- H 064 191

## Beschreibung

Diese Erfindung betrifft eine Schnellkupplung, um ein Werkzeug, welches drehend und schlagend wirkt, an einem Antriebsgerät auswechseln zu können. Solche Werkzeuge müssen mit hohen Drehmomenten gedreht werden und gleichzeitig wird von einer Maschine mit Schlägen mit sehr hohen Kraftspitzen auf das Werkzeug eingewirkt.

Ein solches Werkzeug kann zum Beispiel ein schlagendes und gleichzeitig drehendes Bohrwerkzeug sein, das an ein Bohrgerät angekoppelt wird. Indessen kann sich die Schnellkupplung auch für viele andere Arten von Werkzeugen eingesetzt werden, wenn immer ein Drehmoment einerseits und ein überlagertes Schlagen auf das Werkzeug einwirkt. Eine Anwendung liegt zum Beispiel bei Bohrgeräten zur Entnahme von Bodenproben, wie ein solches nachfolgend kurz beschrieben und erläutert wird. Mit solchen Bohrgeräten können aus irgendwelchen Böden bzw. Gründen Bodenproben entnommen werden, wobei diese Bodenproben annährend ungestört bleiben. Damit ist gemeint, dass aus dem Boden eine zylindrische Probe von etwa einem Meter Länge und 10 cm bis 20 cm Durchmesser in einem Bohrproben-Fänger in Form einer hohlzylindrischen Hülse entnommen wird und an die Oberfläche gebracht wird. An der Oberfläche wird die Bodenprobe aus dem Bohrproben-Fänger ausgestossen und liegt dann horizontal frei zugänglich zum Beispiel auf einem Halbzylinder oder auf einer ebenen Unterlage. Insofern eine solche Bodenprobe aufgrund der Materialkonsistenz teilweise zerfällt, wenn sie aus der Hülse ausgestossen wird, ist sie nicht mehr 100% ungestört. Solche Bodenproben geben Aufschluss über die Bodenbeschaffenheit und insbesondere über allfällige Schadstoffe, die im Verlauf der Zeit in den Boden eindrangen. Es lassen sich dadurch zuverlässige Schadenkataster erstellen und geeignete Massnahmen für die Sanierung solcher Böden können in die Wege geleitet werden.

Die Bohrgeräte weisen einen Bohrmantel auf, mit am unteren Rand des Mantelrohrs einer Bohrkrone. Durch Drehen des Bohrmantels und damit der Bohrkrone und gleichzeitigem Schlagen und daher Rammen wird das Mantelrohr in den Grund eingetrieben und eingebohrt. Im Innern des Mantelrohrs ist der Bohrproben-Fänger, das heisst eine Hülse gelagert, die unten an der Bohrkrone an einer radial nach innen ragenden Auskragung ansteht bzw. anschlägt. Die Hülse dreht indessen beim Bohren nicht, sondern wird einzig in axialer Richtung mitsamt dem Mantelrohr durch das Rammen nach unten getrieben. Nach Erreichen eines Bohrabschnittes wird angehalten und der Bohrproben-Fänger wird aus dem Mantelrohr mitsamt dem Bohrkern nach oben herausgezogen und der Bohrkern wird in horizontaler Lage aus der Hülse herausgestossen und die leere Hülse kann wieder in das Mantelrohr eingesetzt werden. Bei tieferen Bohrungen können sowohl das Mantelrohr wie auch die Hülse mit Einsätzen verlängert werden.

Die Schwierigkeiten, dem Boden solche Bohrkerne zu entnehmen, sind vielfältig und werden meist stark unterschätzt. Die Bohrgeräte entwickeln sehr hohe Drehmomente, und die Rammschläge verursachen enorme Kraftstösse, was an die Konstruktion der drehenden und schlagenden Teile und deren Stabilität ausserordentliche Anforderungen stellt, die rein rechnerisch kaum ermittelbar sind. Der Hydraulikhammer des Bohrgeräts für das Rammen erzeugt auch viel Wärme und es entstehen hohe Temperaturen. Entsprechend ist auch eine Kupplung für die von Zeit zu Zeit auszuwechselnden Bohrwerkzeuge enormen Beanspruchungen ausgesetzt.

Herkömmliche Kupplungen funktionieren meistens mit einer gross dimensionierten Gewindeverbindung. Sie zu lösen und wieder festzuschrauben erweist sich als wenig praktisch. Es wird viel Kraft, viel Drehmoment benötigt und das Wegschrauben und das neue Aufschrauben eines Werkzeuges ist zeitaufwändig. Die Herausforderung besteht darin, dass auf diese Bohrwerkzeuge vom Bohrgerät erzeugt erhebliche Drehmomente einwirken, bis zu 28'000 Nm, und gleichzeitig auch Rammschläge mit sehr hohen Kraftspitzen in grosser Kadenz auf das Bohrwerkzeug einwirken. Die Absorption der von den Kraftspitzen der Rammschläge erzeugten hohen Temperaturen wirkt sich auf eine Kupplung ebenfalls belastend aus. Das macht die Konstruktion einer Schnellkupplung sehr anspruchsvoll, und die Anmelderin erlitt in der Entwicklung einer solchen Schnellkupplung sehr viele Rückschläge, bis schliesslich nach vielen Anläufen eine Lösung gefunden wurde, welche in allen Aspekten befriedigt und die hohe Standzeiten erbringt. Im Stand der Technik sind verschiedene Konstruktionen bekannt. So zeigt etwa die DE 197 17 498 A1 ein Setzgerät für Ankerstangen von Verbundankern. Es weist einen rückwärtigen Endabschnitt (P) von polygonalem Querschnitt, der eine Gehäuse (2) umfasst, dessen eines Ende ein Einsteckende (3) für die Werkzeugaufnahme eines schlagunterstützten Drehbohrgeräts, insbesondere eines Hammerbohrgeräts aufweist. Dessen in axialer Richtung (A) gegenüberliegendes Ende ist mit einer Stangenaufnahme (5) für den rückwärtigen Endabschnitt (P) der Ankerstange ausgestattet. Die Stangenaufnahme (5) weist eine axial verlaufende Innenfläche (6) auf, aus der wenigstens zwei Rippen (7) hervorspringen, die gleichmäßig über den Umgang der axial verlaufenden Innenfläche (6) der Stangenaufnahme (5) verteilt sind und sich in axialer Richtung (A) erstrecken. Die Anordnung der axialen Rippen (7) ist derart gewählt, dass ein von den Rippen(7) tangierter eingeschriebener Zylinder einen Durchmesser (x) aufweist, der etwa 0,05 mm bis 0,5 mm größer ist als der Durchmesser (y) eines größten in den polygonalen Querschnitt des Endabschnitts (P) der Ankerstange einschreibbaren Kreises (K). Die JP H06 4191 U zeigt eine verbesserte Verankerungsstruktur des Bohrhammers und des Gestänges im Bohrkopf einer Bohrmaschine, wie z.B. einer Drehschlagbohrmaschine oder eines hydraulischen Gesteinsbohrers. Die wichtigste Herausforderung sei die Integration und Stärkung der Befestigung des Hammers und Gestänges mit einem Stift, für eine verlängerte Standzeit. Diese Konstruktion setzt axial verlaufende Pins ein, um das Drehmoment zu übertragen. Es fehlen aber Sekantenbohrungen, die den Randbereich der Mitnehmerhülse durchstossen und den äusseren Bereich der Mitnehmerwelle anschneiden, sodass in diese Sekantenbohrungen je ein Befestigungsbolzen einsetzbar ist, zur axialen Sicherung der Mitnehmerwelle in der Mitnehmerhülse. DE 196 38 464 A1 zeigt ein Einsteckende für einen Bohrantrieb. Das Einsteckende weist an seinem einen Ende einen Kupplungsabschnitt (3) zur Ankupplung einer Bohrankerstange auf und ist mit einer axialen Bohrung (12) versehen, die sich bis in einen Abschnitt (9) hinein erstreckt und in einer radialen Bohrung (11) fortgeführt ist, die in Verbindung mit einem ortsfest angeordneten, das Einsteckende im Bereich des Abschnitts (9) umgebenden Adapterteil der Einführung eines strömungsfähigen Mediums in die Bohrankerstange dient. Das strömungsfähige Medium kann ein Spülmedium wie z. B. Wasser oder Luft sein - es kann sich auch um ein aushärtbares Medium wie z. B. eine Mörtelsuspension handeln. Räumlich getrennt von der Bohrung (12) ist das Einsteckende mit einem weiteren Leitungszug zur Führung eines Kühlmediums versehen. Das auf diese Weise gebildete Einsteckende verbindet eine Bohrankerstange mit einem Bohrantrieb und dient darüber hinaus nach Maßgabe des jeweiligen Ankersetzverfahrens der Einführung sämtlicher, für das Erstellen eines Bohrlochs und das Setzen eines Ankers notwendiger Medien in die Bohrankerstange. JP 20000 356083 A zeigt eine Verbindung für die Drehmomentübertragung mit im Querschnitt polygon-förmiger weiblicher Hülse und einem ebenfalls im Querschnitt polygon-förmigen männlichen Steckteil. Es sind keine axial verlaufende Mitnehmerbolzen vorhanden, die drehmomentschlüssig mit der Mitnehmerwelle verbunden sind, und auch keine Sekantenbohrungen, die den Randbereich der Mitnehmerhülse durchstossen und den äusseren Bereich der Mitnehmerwelle anschneiden, sodass in diese Sekantenbohrungen je ein Befestigungsbolzen einsetzbar ist, zur axialen Sicherung der Mitnehmerwelle in der Mitnehmerhülse.

Die Aufgabe der Erfindung ist es also vor diesem technologischen Hintergrund, eine Schnellkupplung für ein drehendes und gleichzeitig schlagendes Werkzeug zu schaffen, welche erstens einfach zu bedienen ist und keine grossen Kräfte zum Auswechseln erfordert, einen wesentlich rascheren Wechsel des Werkzeuges am Antriebsgerät ermöglicht, und die eine robuste Konstruktion bietet, sodass lange Standzeiten der Schnellkupplung gewährleistet sind.

Diese Aufgabe wird gelöst von einer Schnellkupplung für ein drehendes und gleichzeitig schlagendes Werkzeug eines Antriebsgeräts wobei das untere Einsteckende der Einsteckwelle des Antriebsgerätes drehmomentschlüssig mit einer Mitnehmerhülse entweder mittels eines direkten Gewindeanschlusses verschraubbar oder mittels Klemm-Mitteln verspannbar ist, und die sich dadurch auszeichnet, dass die Mitnehmerhülse mittels axial verlaufender Mitnehmerbolzen drehmomentschlüssig mit der Mitnehmerwelle verbunden ist, und wobei zwei auf gleicher Ebene liegende Sekantenbohrungen den Randbereich der Mitnehmerhülse durchstossen und den äusseren Bereich der Mitnehmerwelle anschneiden, und in diese Sekantenbohrungen je ein Befestigungsbolzen einsetzbar ist, zur axialen Sicherung der Mitnehmerwelle in der Mitnehmerhülse.

Anhand der Zeichnungen werden zwei beispielsweise Ausführungen dieser Schnellkupplung nachfolgend beschrieben und ihre Funktionsweise wird erklärt.

Es zeigt:
- Figur 1 :: Die Schnellkupplung von aussen gesehen in perspektivischer Ansicht;
- Figur 2 :: Die Schnellkupplung mit einem Viertel-Sektor in Längsschnitten herausgeschnitten, zur Freigabe des Blicks in das Innere;
- Figur 3 :: Eine axiale Explosionszeichnung der Schnellkupplung mit allen ihren Bestandteilen;
- Figur 4 :: Die Schnellkupplung in einem Längsschnitt längs der Achse A-A dargestellt;
- Figur 5 :: Die Schnellkupplung in Draufsicht von oben gesehen;
- Figur 6 :: Eine alternative Ausführung der Schnellkupplung mit Einsteckwelle;
- Figur 7 :: Einen Längsschnitt durch die alternative Schnellkupplung nach Figur 6 längs der Linie A-A in Figur 6;
- Figur 8 :: Einen Querschnitt durch die Schnellkupplung längs der Ebene B-B in Figur 6;
- Figur 9 :: Einen Längsschnitt durch die Schnellkupplung längs der Ebene C-C in Figur 8.

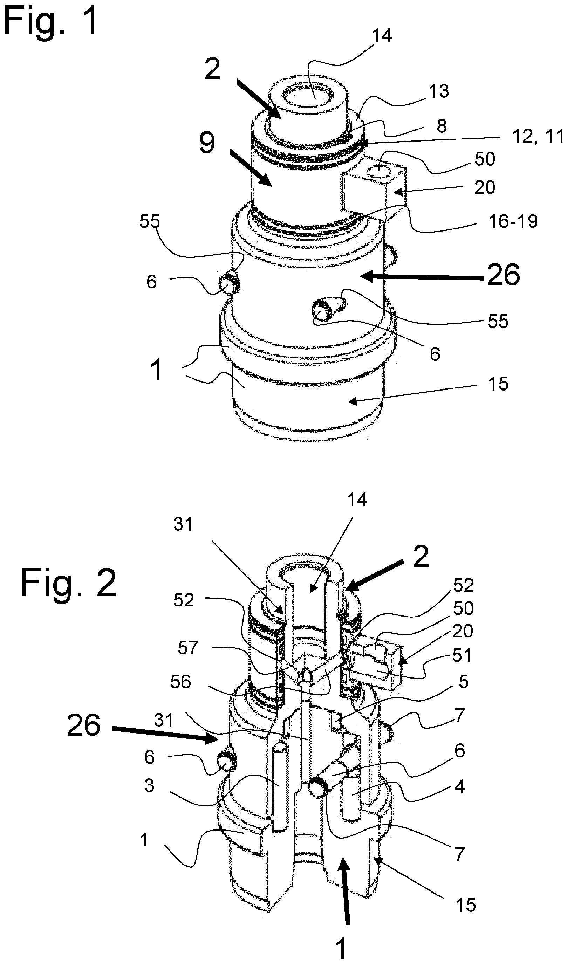

Zunächst zeigt die Figur 1 eine bevorzugte Ausführungsform der Schnellkupplung von aussen gesehen. Das Werkzeug, zum Beispiel ein Bohrwerkzeug, befindet sich unten, die Einsteckwelle des Antriebs- oder Bohrgerätes kommt von oben und wird in das Gewinde 14 im Innern der Spülkopfwelle 2 eingeschraubt. Die Spülkopfwelle 2 ist weiter unten mit einer radialen Schulter in ihrem Aussendurchmesser vergrössert und auf ihr sitzt ein Spülring 9, der auf dieser Schulter mittels eines Gleitringsatzes 16-19 drehbar auf der Spülkopfwelle 2 gelagert ist und auf seiner Oberseite mit einem Gummiring 11 und darüber einem Kunststoffring 12 gelagert ist und mittels eines Sicherungsringes 8 gesichert ist. Im Betrieb bleibt dieser Spülring 9 stationär, während sich die Spülkopfwelle 2, angetrieben von der Einsteckwelle des Bohrgerätes dreht. Auf der Aussenseite des Spülrings 9 erkennt man einen radial auskragenden Vorbau 20, ähnlich eines Erkers mit oben einer Anschlussbohrung 50. Diese führt im Innern in eine axial verlaufende Spülbohrung, wie das anhand der weiteren Figuren noch klar wird. Unterhalb des Spülrings 9 folgt hier die einstückig mit der Spülkopfwelle 2 verbundene Mitnehmerhülse 26. Unterhalb der Mitnehmerhülse 26 erkennt man eine radial auskragende Schulter, die zur Mitnehmerwelle 1 gehört, in die unterhalb dieser Schulter ein Aussengewinde 15 geschnitten ist. Mit diesem Aussengewinde 15 wird das Drehmoment der Mitnehmerwelle 1 auf ein über das Gewinde 15 geschraubtes Bohrrohr übertragen. Das Bohrrohr weist hierzu ein passendes Innengewinde auf und es wird bis zur Schulter auf dieses Aussengewinde 15 geschraubt. Die Schulter bildet dann einen Anschlussflansch. Im Weiteren wird beschrieben, wie das Drehmoment von der Spülkopfwelle 2 und der mit ihr einstückig verbundenen Mitnehmerhülse 26 auf die Mitnehmerwelle 1 und schliesslich auf das angeschraubte Bohrrohr übertragen wird. Ebenfalls wird dann klar, wie die Rammschläge der Einsteckwelle des Bohrgerätes auf die Mitnehmerwelle 1 übertragen werden.

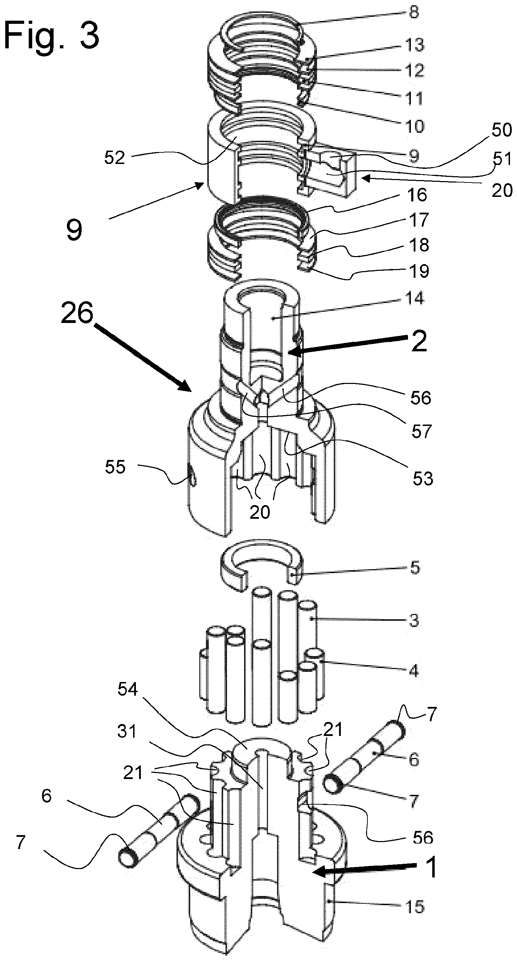

Hierzu zeigt die Figur 2 die Schnellkupplung mit einem Viertel-Sektor in Längsschnitten herausgeschnitten, zur Freigabe des Blicks in das Innere. Hier erkennt man die Dicht- und Gleitringe, welche dafür sorgen, dass die Spülkopfwelle 2 im Spülring 9 drehen kann und wie der Spülring 9 auf der Spülkopfwelle 2 gesichert ist. Im radial auskragenden Vorbau 20 am Spülring 9 erkennt man aufgrund der Schnittdarstellung die Anschlussbohrung 50 und im Innern eine mit ihr kommunizierende radiale Bohrung 51. Diese führt schliesslich in eine Spülbohrung 31, die im Innern der Mitnehmerhülse 26 ein Y-bildet. Die radiale Bohrung 51 mündet zunächst in einen innerhalb des Spülrings 9 innerhalb desselben umlaufenden Kanal 52 und von diesem zweigen die beiden Äste des Y schräg nach unten ab und führen schliesslich in die axiale zentrale Spülbohrung 31. Das Drehmoment der Mitnehmerhülse 26 wird hier mittels einer Anzahl von axial angeordneten Mitnehmerbolzen 3, 4 von aussen nach innen auf die Mitnehmerwelle 1 übertragen. Diese axial verlaufenden Mitnehmerbolzen 3, 4 bilden eine Reihe von Bolzen, die um den ganzen Umfang der Mitnehmerwelle 1 verteilt angeordnet sind. Daher werden die Drehmomente und die entsprechenden Kräfte auf viele solche Mitnehmerbolzen 3, 4 verteilt, sodass ein einzelner entsprechend begrenzt belastet ist, was der Standzeit dieser Schnellkupplung sehr förderlich ist. Die genaue Anordnung der Mitnehmerbolzen 3, 4 wird anhand der Figur 3 noch ersichtlich. Die Sicherung der Mitnehmerhülse 26 auf der Mitnehmerwelle 1 in axialer Richtung erfolgt mittels der zweier sekantenförmig angeordneter Befestigungsbolzen 6. Diese stecken in Sekantenbohrungen 55 in der Mitnehmerhülse 26, wobei diese Sekantenbohrungen 55 im Innern auch die von der Mitnehmerhülse 26 umfasste Mitnehmerwelle 1 sekantenförmig anschneiden. Die Bolzen 6 sind gegen ihre beiden Enden hin vorteilhaft leicht verjüngt, wodurch sich leichter in die Bohrungen einführbar sind. In den Bohrungen 55 sind sie schliesslich mittels O-Ringen 7 vor einem Herausfallen gesichert.

Die Figur 3 zeigt nun eine axiale Explosionszeichnung der Schnellkupplung mit allen ihren Bestandteilen. Hier erkennt man jedes Detail des Aufbaus dieser Schnellkupplung. Beginnend ganz oben in der Explosionszeichnung erkennt man zuoberst den Sicherungsring 8, mit dem der Spülring 9 auf der Spülkopfwelle 2 gesichert wird. Unterhalb des Sicherungsringes 8 folgen von oben nach unten zunächst ein Stahlring 13, dann ein Kunststoffring 12 und dann ein Gummiring 11, gefolgt von einem Dichtsatz 10. Unter diesem Satz von Gleit- und Dichtungsringen erkennt man den Spülring 9 mit einem aus seiner Innenwand ausgenommenen umlaufenden Kanal 52, in welchen die radiale Bohrung 51 im auskragenden Vorbau 20 mündet, für die Zufuhr von Spülflüssigkeit. Unterhalb des Spülrings 9 sind wiederum mehrere Gleitringe angeordnet, nämlich ein Spannring 16 für diesen Gleitringsatz, ein oberer Gleitring 17, ein mittlerer Gleitring 18 und ein unterer Gleitring 19. Diese Gleitringe unterhalb und oberhalb des Spülrings 9 stellen seine Drehbarkeit gegenüber der Spülkopfwelle 2 sicher, damit der Spülring 9 beim Drehen der Spülkopfwelle 2 stationär bleiben kann und also nicht mit der Welle 2 mitdreht. Unterhalb des Gleitringsatzes erkennt man hier nun die Spülkopfwelle 2, über welche der Spülring 9 gestülpt wird und darauf für eine Rotation gleitend und in axialer Richtung unverrückbar gesichert ist.

Der im Innern des Spülringes 9 längs seines Umfangs umlaufende Kanal 52 liegt bei aufgesetztem Spülring 9 dann gegenüber den Mündungen der hier von der axialen Spülbohrung 31 in der Mitnehmerwelle 2 Y-förmig nach oben verzweigenden Spülkanäle 56, 57. Unten öffnet sich die Spülkopfwelle 2 wie eine Glocke und bildet eine Mitnehmerhülse 26. Diese Mitnehmerhülse 26 weist in ihrer Innenwand eine Anzahl axiale halbzylindrische Bohrungen 20 auf, zur Aufnahme von Mitnehmerbolzen 3, 4. In ihrem Innern bildet sie oben eine nach unten gerichtete Schlagfläche 53, mit der sie auf dem oberen ebenen Ende 54 der Mitnehmerwelle 1 mit ihrem Anschlussflansch aufliegt. Unterhalb der Mitnehmerhülse 26 erkennt man einen offenen Dichtungsring 5, der im montierten Zustand der Schnellkupplung den obersten Abschnitt der Mitnehmerwelle 1 umfasst und die als Spülbohrung axial verlaufende Bohrung 31 zwischen der Mitnehmerwelle 1 und der Mitnehmerhülse 26 abdichtet. Unterhalb des Dichtungsrings 5 erkennt man alle Mitnehmerbolzen 3, 4 in axialer Einbaulage, von denen es längere Mitnehmerbolzen 3 und kürzere Mitnehmerbolzen 4 gibt. Die kürzeren sind deswegen kürzer, weil sie an jener Umfangsstelle angeordnet sind, wo die Mitnehmerwelle 1 und die Mitnehmerhülse 26 von sekantenförmigen Befestigungsbolzen 6 durchsetzt sind und daher kein Raum für lange Mitnehmerbolzen 3 freibleibt.

Unterhalb der Mitnehmerbolzen 3, 4 ist die Mitnehmerwelle 1 dargestellt. Hier erkennt man in ihrem oberen Teil die rund um den Umfang verteilt angeordneten halbzylindrischen Bohrungen 21 für die Aufnahme der Mitnehmerbolzen 3, 4, sowie beidseits der Mitnehmerwelle 1 dargestellt die beiden sekantenförmig einzusteckenden Befestigungsbolzen 6 mit ihren O-Ringen 7 als ihre Sicherung in ihren Bohrungen 55 an der Mitnehmerhülse 26. Diese Bohrungen 55 schneiden die Mitnehmerwelle 1 an der Stelle 56 an, und entlang derselben verläuft je ein Befestigungsbolzen 6. Die Mitnehmerwelle 1 wird mit ihrem Aussengewinde 15 an ihrem unteren Abschnitt in das Innengewinde eines Bohrrohres eingeschraubt, bis dieses Bohrrohr am von der Schulter gebildeten Anschlussflansch von unten anschlägt. Die Spülkopfwelle 2 schlägt dann ihre Rammschläge mit ihrer Schlagfläche 53 auf die oben ebene Fläche 54 der Mitnehmerwelle 1 und das Drehmoment der Spülkopfwelle 2 wird mittels der Mitnehmerbolzen 3, 4 dauerhaft zuverlässig auf die Mitnehmerwelle 1 und das Bohrrohr übertragen.

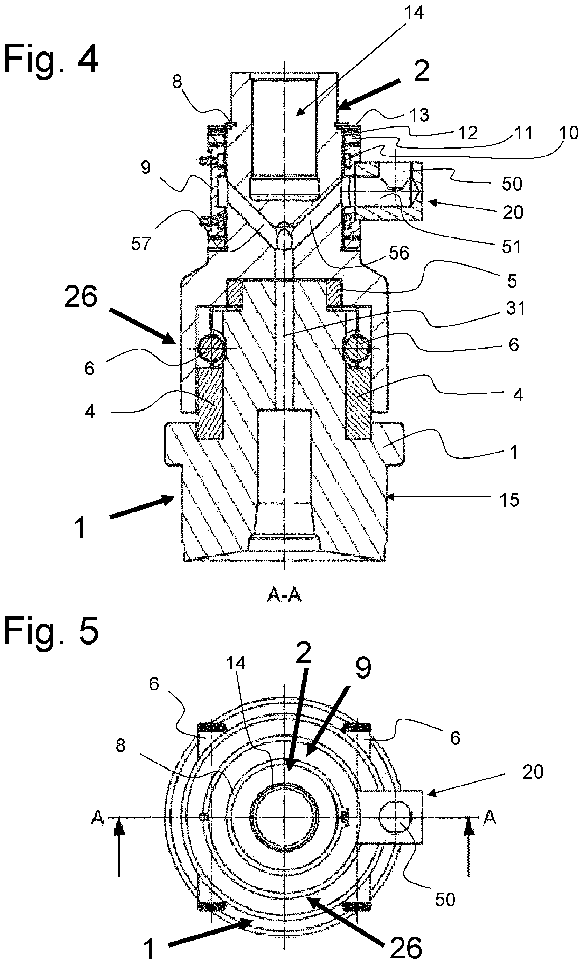

Die Figur 4 zeigt die Schnellkupplung in einem Längsschnitt längs der zentralen Achse A-A in Figur 5 dargestellt. Oben sieht man das Innengewinde 14 in der Spülkopfwelle 2 und den um ihren obersten Abschnitt herum angelegten Spülring 9 mit seinen Gleit- und Dichtringen 8, 11, 12, 13 auf seiner Oberseite und seinen Gleitringen auf seiner Unterseite. Man erkennt auch den radial auskragenden Anbau 20 mit der darin eingebrachten axialen Anschlussbohrung 50 sowie der radial verlaufenden Bohrung 51, die ins Innere des Spülrings 9 führt, und von dort durch die beiden Y-förmig angeordneten Bohrungen 56, 57 in die zentrale Spülbohrung 31 führt. Innerhalb der Mitnehmerhülse 26 erkennt an die Mitnehmerwelle 1 mit der zentralen axialen Spülbohrung 31. Die Mitnehmerhülse 26 liegt satt auf der Mitnehmerwelle 1 auf, zum Übertragen der Rammschläge auf die Mitnehmerwelle 1. Weiter erkennt man im oberen Abschnitt der Mitnehmerwelle 1 die dort axial angeordneten Mitnehmerbolzen 4 sowie die im Querschnitt dargestellten Befestigungsbolzen 6. Im untersten Abschnitt der Mitnehmerwelle 1 ist diese mit einem Aussengewinde 15 ausgerüstet, zum Einschrauben der Mitnehmerwelle 1 in das Innengewinde eines Bohrrohres.

Schliesslich zeigt die Figur 5 diese Schnellkupplung in Draufsicht von oben gesehen. Zuoberst und hier entsprechend zuinnerst erkennt man die Spülkopfwelle 2 mit ihrem Innengewinde 14 zum Anschliessen des Bohrhammers. Dann folgt konzentrisch nach aussen der Spülring 9 mit seinem radial ausrkagenden Vorbau 20 und mit der axialen Anschlussbohrung 50 für die Spülung. Man erkennt die Sicherungsring 8 für die Sicherung des Spülrings 9 auf der Spülkopfwelle 2. Konzentrisch nach aussen erkennt man als Nächstes die Mitnehmerhülse 26 und die sekantenförmig aus ihr herausragenden Befestigungsbolzen 6, und schliesslich zuäussert die Mitnehmerwelle 1.

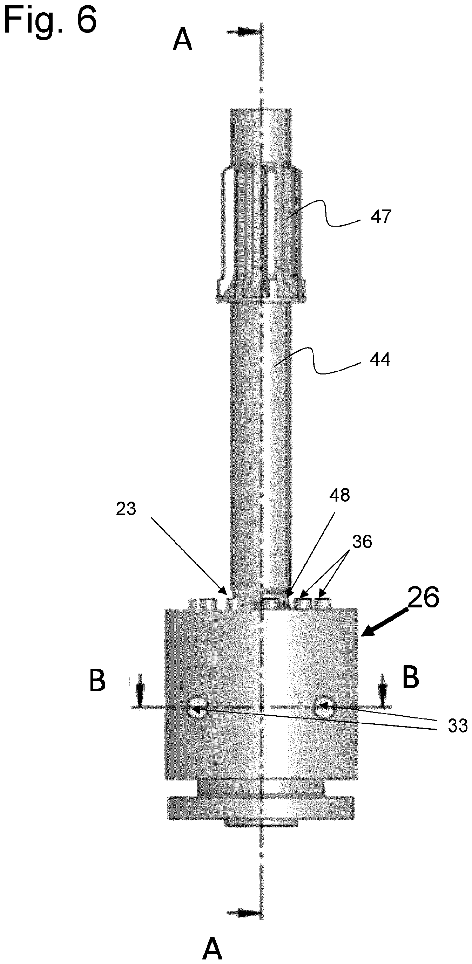

Eine weitere Ausführung einer Schnellkupplung ist in den Figuren 6 bis 9 gezeigt, in Figur 6 zunächst von aussen gesehen. Das Bohrwerkzeug ist unten, die Einsteckwelle 44 des Bohrgerätes kommt von oben und läuft unten in das untere Einsteckende 23 dieser Einsteckwelle 44 aus. Dieses Einsteckende 23 weist ein Aussengewinde 48 auf, mit welchem es in eine Gegendruckhülse einschraubbar ist, die hier nicht sichtbar ist, weil sie sich im Innern der hier von aussen sichtbaren Mitnehmerhülse 26 verbirgt. Oben erkennt man die Köpfe einer Anzahl von Spannschrauben 36, deren Funktion sich anhand der weiteren Figuren sowie deren Beschreibung noch erschliessen wird. Im oberen Bereich der Einsteckwelle 44 sind die Rippen einer Verzahnung 47 sichtbar. Die Einsteckwelle 44 kann von unten in eine entsprechend verzahnte Aufnahmehülse am Bohrgerät eingesteckt werden, womit eine drehmomentschlüssige Verbindung mit deren Abtriebswelle erstellt ist. Im gezeigten Beispiel misst die Einsteckwelle 44 zum Beispiel 190 mm im Durchmesser, und die Mitnehmerhülse 26 misst 62 mm. Diese Masse können für eine spezifische Ausführung variieren. In dieser Figur 6 erkennt man ausserdem die beiden eingezeichneten Schnittebenen A-A und B-B. Diese Schnittansichten sind Gegenstand weiterer Figuren.

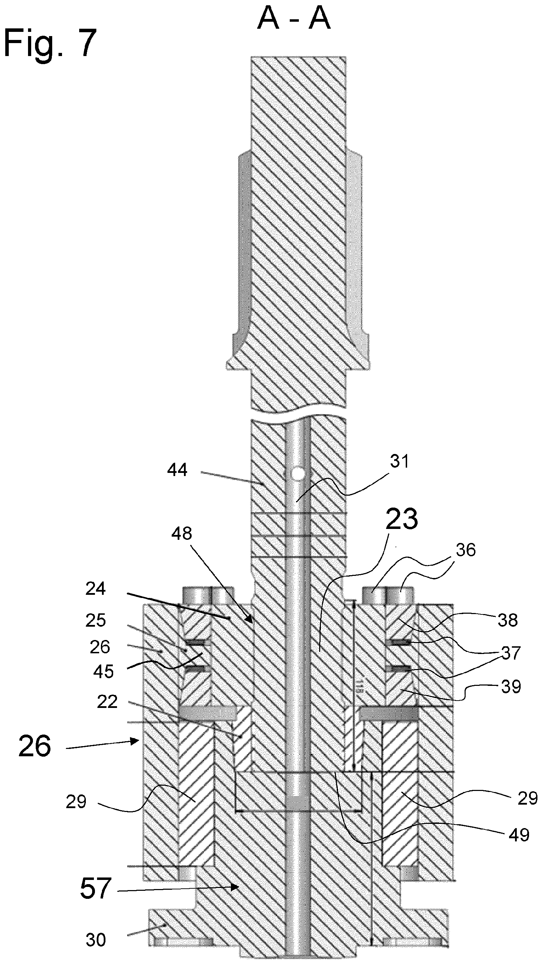

Die Figur 7 zeigt dazu einen Längsschnitt durch die Schnellkupplung längs der Linie A-A in Figur 6 in vergrössertem Massstab. Hier erkennt man, wie das untere Einsteckende 23 der Einsteckwelle 44 mit ihrem Aussengewinde 48 in ein dazu passendes Innengewinde in der Gegendruckhülse 24 in diese eingeschraubt ist. Im Innern der Einsteckwelle 44 verläuft ein Spülkanal 31. Unten schlägt das untere Ende 49 der Einsteckwelle 44 als Schlagfläche schliesslich an der Mitnehmerwelle 57 mit ihrem Flansch 30 und dem Bohrwerkzeug an. Über diese Einsteckwelle 44 werden die Rammschläge des Bohrgerätes in direktester Weise auf die Mitnehmerwelle 57 des Bohrwerkzeuges übertragen. Ein Teilaspekt dieser Schnellkupplung ist es, wie das sehr grosse vom Bohrgerät stammende Drehmoment der Einsteckwelle 44 auf die Mitnehmerhülse 26 und von dieser schliesslich auf die Mitnehmerwelle 57 des Bohrwerkzeuges übertragen wird. Das ist der Kern der Konstruktion. Diese Drehmomentübertragung muss stark und zuverlässig erfolgen, sind doch Drehmomente bis 28'000 Nm am Werk, und trotzdem soll sich die Mitnehmerwelle 57 mit dem Bohrwerkzeug daran rasch auswechseln lassen.

Wie man in der Figur 7 rechts der Einsteckwelle 44 erkennt, schliessen aussen radial an die Gegendruckhülse 24 Klemm-Mittel 38, 39 an, zu denen auch eine Ringfeder 25 gehört. Diese Klemm-Mittel sind hier von einem oberen, im Querschnitt keilförmigen Klemmring 38 und einem unteren, im Querschnitt ebenso keilförmigen Klemmring 39 gebildet. Der obere Klemmring 38 liegt auf einer radial nach innen auskragenden Schulter 45 einer Ringfeder 25 an. Die Ringfeder 25 weist an einer Umfangstelle eine Unterbrechung auf und sie stützt sich mit ihrer Aussenseite an der Innenseite der Mitnehmerhülse 26 ab. Sie kann dank der Unterbrechung im Umfang leicht schrumpfen oder sich ausdehnen. Spannschrauben 36 durchsetzen die beiden Klemmringe 38, 39 und die Schulter 45 der Ringfeder 25 in axialer Richtung. Die Abstände zwischen den Klemmringen 38, 39 und der Schulter 45 geben den Blick frei auf die Gewinde 37 dieser Spannschrauben 36. Oben sieht man die Köpfe dieser Schrauben 36, die oben auf dem oberen Klemmring 38 anliegen. Eine Vielzahl von solchen Schrauben 36 sind um den ganzen Umfang der Klemmringe 38, 39 verteilt. Werden diese Schrauben 36 verspannt, so ziehen sie die beiden Klemmringe 38, 39 in axialer Richtung gegen die Auskragung 45 und drücken dadurch ihre Schrägflächen an die Ringfeder 25 und entsprechend drücken sie auch auf die Aussenseite der Gegendruckhülse 24, welche das eingeschraubte Einsteckende 23 der Einsteckwelle 44 umschliesst. Weil die Gegendruckhülse 24 mindestens einen axialen Schlitz aufweist, kann sie sich verengen und umschliesst infolge Verspannens der Schrauben 36 kraft des Keilmechanismus das eingeschraubte Einsteckende 23 der Einsteckwelle 44 sehr satt, sodass eine innige Verspannung der Gegendruckhülse 24 mit der Mitnehmerhülse 26 erreicht wird. Dabei stützt sich die Ringfeder 25 mit ihrer Aussenfläche an der Innenseite der Mitnehmerhülse 26 ab. Insgesamt wird eine höchst kräftige, drehmomentstarke Verspannung über eine Umfangsfläche mit einer axialen Ausdehnung von hier ca. 70 mm erzielt. Die bis zu 28 kNm reichenden Drehmomente der Einsteckwelle 44 werden damit mit grösster Zuverlässigkeit auf die Mitnehmerhülse 26 übertragen, und von dieser auf die Mitnehmerwelle 57 mit dem Bohrwerkzeug.

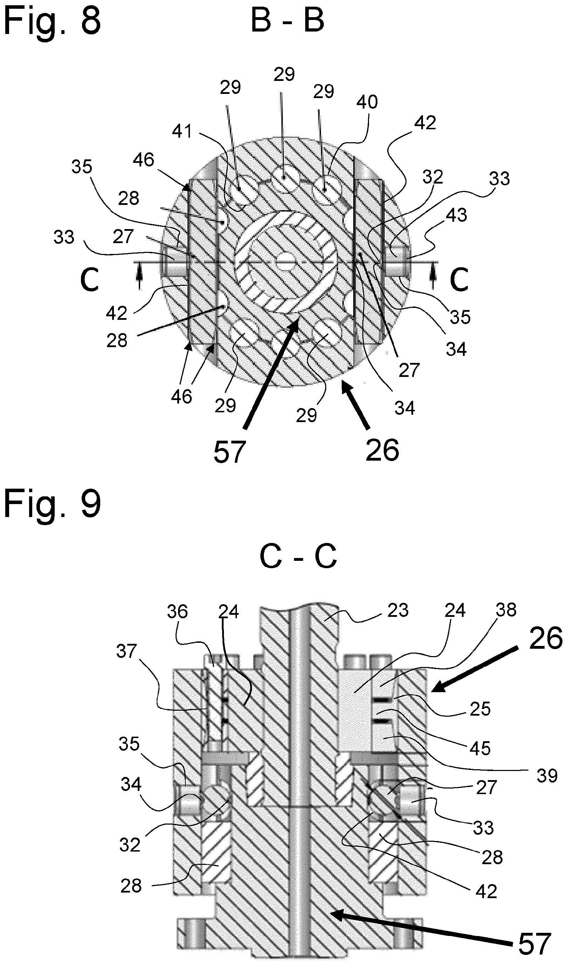

Die Figur 8 zeigt als nächstes einen Querschnitt durch die Schnellkupplung längs der Ebene B-B in Figur 6. Diese Figur zeigt, wie das Drehmoment von der Mitnehmerhülse 26 weiter auf die Mitnehmerwelle 57 mit dem Bohrwerkzeug übertragen wird. Zu diesem Zweck weist die Mitnehmerhülse 26 auf ihrer Innenseite eine Anzahl von im Querschnitt halbkreisförmigen Ausnehmungen 40 auf, und die von unten in diese Mitnehmerhülse 26 gesteckte Mitnehmerwelle 57 weist diesen Ausnehmungen 40 gegenüberliegende, ebenfalls im Querschnitt halbkreisförmige Ausnehmungen 41 auf. Insgesamt werden so Ausnehmungen mit kreisförmigem Querschnitt gebildet, in denen Mitnehmerbolzen 28, 29 eingelegt sind. Diese Mitnehmerbolzen 28, 29 sind zum Beispiel aus PEEK Kunststoff gefertigt und messen im gezeigten Beispiel 24.5 mm im Durchmesser. Die in der Figur 8 nur teilweise einsehbaren Mitnehmerbolzen 28 messen 52 mm in der Länge und die anderen voll sichtbaren Mitnehmerbolzen 29 je 99 mm. Wenn die äussere Mitnehmerhülse 26 dreht, so nimmt sie via diese Mitnehmerbolzen 28, 29 die inliegende Mitnehmerwelle 57 mit dem Bohrwerkzeug mit. Weiter erkennt man in der Figur 8 die Konstruktion, um die Mitnehmerwelle 57 mit dem Bohrwerkzeug rasch aus der Mitnehmerhülse 26 nach unten herauszuziehen und eine neue oder andere Mitnehmerwelle 57 mit einem anderen oder neuen Bohrwerkzeug einzusetzen. Dazu sind zwei parallele Sekantenbohrungen 42 durch die Mitnehmerhülse 26 eingebracht. Diese Sekantenbohrungen 42 schneiden wie man sieht auch die inliegende Mitnehmerwelle 57 an. In diese Sekantenbohrungen 42 ist je ein Befestigungsbolzen 27 eingesetzt. Die Befestigungsbolzen 27 laufen an beiden Enden zu einem spitzen Kegelstumpf 46 aus, sodass sie leichter in diese Sekantenbohrungen 42 einschiebbar sind. Damit sie in der eingesetzten Lage sicher gehalten sind, gibt es je eine radiale Bohrung 35 in der Mitnehmerhülse 26, welche in der Mitte der eingesetzten Befestigungsbolzen 27 auf diese trifft. In diese radialen Bohrungen 35 ist je ein Sicherungsbolzen 33 eingesetzt. Diese Sicherungsbolzen 33 sind in den Bohrungen 35 mittels einer Radial-Wellendichtung, das heisst eines Simmerrings 43 gesichert. An seinem vorderen Ende weist jeder Sicherungsbolzen 33 eine von innen Druckfederbelastete Kugel 32 auf, die bei eingesetzten Sicherungsbolzen 33 in die Sekantenbohrung 42 hineinragt. Die Befestigungsbolzen 27 weisen in ihrer Mitte je eine umlaufende Ringnut 34 auf. Beim Einschieben der Befestigungsbolzen 27 - sie werden dazu mit einem Hammer und einem Einschlagstift eingeschlagen - rasten die Kugeln 32 in diese Ringnuten 34 ein und die Befestigungsbolzen 27 sind hernach sicher in den Sekantenbohrungen 42 gehalten. Damit ist die Mitnehmerwelle 57 mit dem Bohrwerkzeug gegen jedes axiale Verschieben in der Mitnehmerhülse 26 narrensicher gehalten. Zum Lösen dieser Verriegelung schlägt man die Befestigungsbolzen 27 mit Hammer und Einschlagstift aus den Sekantenbohrungen 42 heraus. Die Kugeln 32 weichen durch den erhöhten Druck auf die wirkenden und nachgebenden Druckfedern aus, sodass die Befestigungsbolzen 27 komplett aus diesen Sekantenbohrungen 42 herausgezogen werden können. Dann kann die Mitnehmerwelle 57 aus der Mitnehmerhülse 26 herausgezogen werden. Eine neue kann eingesetzt werden und sie wird gleichermassen durch Einschieben oder Einschlagen der Befestigungsbolzen 27 in die Sekantenbohrungen 42 in der Mitnehmerhülse 26 gesichert.

Schliesslich zeigt die Figur 9 noch einen Längsschnitt durch die Schnellkupplung längs der Ebene C-C in Figur 8. An jenen Stellen, wo die Sekantenbohrungen 42 die Mitnehmerwelle 1 schneiden, sind die Mitnehmerbolzen 28 kürzer als sonst ausgeführt, nämlich im gezeigten Beispiel wie schon erwähnt bloss 52 mm lang anstatt 99 mm lang, weil sie oben Platz freilassen müssen für diese Sekantenbohrungen 42 und die in sie einzuschiebenden Befestigungsbolzen 27. Links oben in der Figur 9 erkennt man noch eine Spannschraube 36 für die Erzeugung der Verklemmung der Mitnehmerhülse 26 mit der Gegendruckhülse 24. Wie man erkennt durchsetzt diese Spannschraube 36 mit ihrem Gewinde 37 die beiden Klemmringe 38, 39 sowie auch die auskragende Schulter 45 an der Ringfeder 25.

Mit diesem Schnellverschluss lässt sich ein Bohrwerkzeug sehr einfach, sicher und rasch auswechseln. Es brauchen bloss zwei Befestigungsbolzen 27 aus ihren Sekantenbohrungen 42 herausgeschlagen zu werden und schon kann das Werkzeug mit seiner Mitnehmerwelle 57 herausgezogen werden. Das Einsetzen erfolgt in umgekehrter Richtung und Reihenfolge.

Dieser Schnellverschluss, so einfach, sicher und rasch er bedienbar ist, gewährleistet trotzdem die zuverlässige Übertragung sowohl der vielen sehr grossen Kraftstösse der Rammschläge des Bohrgerätes wie auch die Übertragung der hohen Drehmomente bis 28 kNm auf die Bohrkrone des Bohrwerkzeuges und widersteht den hohen auftretenden Temperaturen und dies auch dauerhaft, mit aussergewöhnlich hohen Standzeiten.

### Ziffernverzeichnis

- 1: Mitnehmerwelle mit Anschlussflansch in Figur 1
- 2: Spülkopfwelle in Figur 1
- 3: Mitnehmerbolzen lang in Figur 3
- 4: Mitnehmerbolzen kurz in Figur 3
- 5: Dichtung in Figur 3
- 6: Befestigungsbolzen in Figur 3
- 7: O-Ring am Befestigungsbolzen 6, in Figur 3
- 8: Sicherungsring in Figur 3
- 9: Spülring in Figur 3
- 10: Dichtsatz in Figur 3
- 11: Gummiring in Figur 3
- 12: Kunststoffring in Figur 3
- 13: Stahlring in Figur 3
- 14: Innengewindeanschluss für den Bohrhammer in Figur 3
- 15: Aussengewindeanschluss für das Bohrrohr in Figur 3
- 16: Spannring für Gleitringsatz in Figur 3
- 17: oberer Gleitring in Figur 3
- 18: mittlerer Gleitring in Figur 3
- 19: unterer Gleitring in Figur 3
- 20: radialer Vorbau am Spülring 9 in Figur 7
- 21: halbkreisförmige Ausnehmung in 1 in Figur 3
- 22: Dichtung mit Innengewinde in Figur 7
- 23: Einsteckende mit Aussengewinde in Figur 7
- 24: Gegendruckhülse in Figur 7
- 25: Ringfeder in Figur 7
- 26: Mitnehmerhülse in Figur 7
- 27: Befestigungsbolzen in Figur 7
- 28: lange Mitnehmerbolzen aus K in Figur 7unststoff
- 29: kurze Mitnehmerbolzen aus Kunststoff in Figur 7
- 30: Anschlussflansch in Figur 7
- 31: Spülbohrung an 1 in Figur 3 und 7
- 32: Druckbelastete Kugel am Ende des Sicherungsbolzens 13 in Figur 8
- 33: Sicherungsbolzen in Figur 8
- 34: Kreisnut am Befestigungsbolzen in Figur 8
- 35: Radiale Bohrung für Sicherungsbolzen 13 in Figur 8
- 36: Spannschrauben für Klemmringe in Figur 9
- 37: Gewinde der Spannschrauben 16 in Figur 9
- 38: oberer Klemmring mit keilförmiger Schrägfläche in Figur 9
- 39: unterer Klemmring mit keilförmiger Schrägfläche in Figur 9
- 40: im Querschnitt halbkreisförmige Ausnehmungen in Innenseite der Mitnehmerhülse 26 in Figur 8
- 41: im Querschnitt halbkreisförmige Ausnehmungen in Aussenseite der Mitnehmerwelle 57 in Figur 8
- 42: Sekantenbohrung in Figur 8
- 43: Simmerring am Sicherungsbolzen 13 in Figur 8
- 44: Einsteckwelle des Bohrgerätes in Figur 6 und 7
- 45: radial nach innen abstehende Schulter an der Ringfeder 5 in Figur 946 kegelstumpfförmige Endbereiche der Befestigungsbolzen 7 in Figur 8
- 47: Verzahnung an der Einsteckwelle 24 in Figur 6 und 7
- 48: Aussengewinde unten an der Einsteckwelle 24 in Figur 7
- 49: Unteres Ende der Einsteckwelle 24 in Figur 7
- 50: Anschlussbohrung in Vorbau 20 am Spülring 9 in Figur 3
- 51: radiale Bohrung im Vorbau 20 in Figur 3
- 52: innerer umlaufender Kanal in Spülring in Figur 3
- 53: unten ebene Auflagefläche der Mitnehmerhülse 26, zum Aufliegen auf der Mitnehmerwelle 1 in Figur 3
- 54: obere ebene Auflagefläche fü die Mitnehmerhülse 26 in Figur 3
- 55: sekantenförmige Bohrungen in der Mitnehmerhülse 26 in Figur 3
- 56: Schnittflächen der Bohrungen 43 an der Mitnehmerwelle 1 in Figur 3
- 57: Mitnehmerwelle in Figur 7 bis 9

## Patentansprüche

1. Schnellkupplung für ein drehendes und gleichzeitig schlagendes Werkzeug eines Antriebsgeräts mit einer Einsteckwelle (44), wobei ein unteres Einsteckende (23) der Einsteckwelle (44) des Antriebsgerätes drehmomentschlüssig mit einer Mitnehmerhülse (26) entweder mittels eines direkten Gewindeanschlusses (14) verschraubbar oder mittels Klemm-Mitteln (38,39) verspannbar ist, ***dadurch gekennzeichnet,* dass** die Mitnehmerhülse (26) mittels axial verlaufender Mitnehmerbolzen (3, 4; 28, 29) drehmomentschlüssig mit einer Mitnehmerwelle (1; 57) verbunden ist, und wobei zwei auf gleicher Ebene liegende Sekantenbohrungen (55; 42) den Randbereich der Mitnehmerhülse (26) durchstossen und den äusseren Bereich der Mitnehmerwelle (1; 57) anschneiden, und in diese Sekantenbohrungen (55; 42) je ein Befestigungsbolzen (6; 27) einsetzbar ist, zur axialen Sicherung der Mitnehmerwelle (1; 57) in der Mitnehmerhülse (26).

2. Schnellkupplung nach Anspruczh 1, ***dadurch gekennzeichnet,* dass** die axial verlaufenden Mitnehmerbolzen (3, 4; 28, 29) zur Hälfte ihres Querschnittes in axialen Ausnehmungen (20; 40) in der Innenseite der Mitnehmerhülse (26) liegen und zur Hälfte ihres Querschnittes in ebensolchen Ausnehmungen (21; 41) in der Aussenseite einer Mitnehmerwelle (1; 57).

3. Schnellkupplung nach einem der vorangehenden Ansprüche, ***dadurch gekennzeichnet,* dass** die Einsteckwelle direkt oder die Mitnehmerhülse (26) mit einer unten ebenen Auflagefläche als Schlagfläche (53; 49) auf der Mitnehmerwelle (1, 57) aufliegt, zur direkten Übertragung von Rammschlängen der Einsteckwelle auf die Mitnehmerwelle (1, 57) und somit auf das an der Mitnehmerwelle (1) angeschraubte Bohrrohr.

4. Schnellkupplung nach einem der vorangehenden Ansprüche, ***dadurch gekennzeichnet,* dass** auf dem oberen Abschnitt der Mitnehmerhülse (26) ein flüssigkeitsdichter Spülring (9) aufgesetzt ist, sodass dieser bei Drehung der Mitnehmerhülse (26) stationär bleibt, und dass durch diesen Spülring (9) über einen Spülanschluss (50, 51) von aussen Spülflüssigkeit zu seiner Innenseite und dort in einen ihn innen umlaufenden Kanal (52) führbar ist, von welchem Kanal (52) aus die Spülflüssigkeit durch Bohrungen (56, 57) in eine axiale innere Spülbohrung (31) in der Mitnehmerhülse (26) und der Mitnehmerwelle (1) geführt ist.

5. Schnellkupplung nach Anspruch 4, ***dadurch gekennzeichnet,* dass** der Spülring (9) unten und oben auf einer Mehrzahl von Gleitringen aufliegt.

6. Schnellkupplung nach Anspruch 4, ***dadurch gekennzeichnet,* dass** der Spülring (9) unten und oben auf einer Mehrzahl von Gleitringen aufliegt, nämlich unterhalb des Spülrings (9) von oben nach unten auf einem Spannring (16), einem oberen Gleitring (17), einem mittleren Gleitring (18) und einem unteren Gleitring (19), und dass er oben von oben nach unten mittels eines Sicherungsrings (8) gesichert ist, und unterhalb desselben ein Stahlring (13) eingebaut, ist gefolgt von einem Kunststoffring (12) und dann einem Gummiring (11) und dann einem Dichtsatz (10).

7. Schnellkupplung nach einem der Ansprüche 1 bis 3, ***dadurch gekennzeichnet,* dass** das untere Einsteckende (23) der Einsteckwelle (44) des Antriebsgerätes mit einer um dieses Einsteckende (23) verlaufenden Innenseite der Mitnehmerhülse (26) mittels Klemm-Mitteln (38, 39) verspannbar ist, und die Mitnehmerhülse (26) mittels axial verlaufender Mitnehmerbolzen (28, 29) drehmomentschlüssig mit der Mitnehmerwelle (57) verbunden ist, und wobei zwei auf gleicher Ebene liegende Sekantenbohrungen (42) den Randbereich der Mitnehmerhülse (26) durchstossen und den äusseren Bereich der Mitnehmerwelle (57) anschneiden, und in diese Sekantenbohrungen (42) je ein Befestigungsbolzen (27) einsetzbar ist, zur axialen Sicherung der Mitnehmerwelle (57) in der Mitnehmerhülse (26).

8. Schnellkupplung nach einem der Ansprüche 1 bis 3 sowie 7, ***dadurch gekennzeichnet,* dass** das untere Einsteckende (23) der Einsteckwelle (44) des Bohrgerätes mit einer um dieses Einsteckende (23) herum verlaufenden Innenseite der Mitnehmerhülse (26) mittels Klemm-Mitteln (38, 39) verspannbar ist, indem das Einsteckende (23) zentral unter Freilassung eines Hohlzylinders in die Mitnehmerhülse (26) hineinragt, und diese Einsteckwelle (44) von einer Gegendruckhülse (24) mit mindestens einem axialen Schlitz satt umschlossen ist, und zwischen der Aussenseite der Gegendruckhülse (24) und der Innenseite der Mitnehmerhülse (26) im Querprofil keilförmige Klemmringe (38, 39) als Klemm-Mittel eingesetzt sind, mit deren Verspannung durch Verschieben der Schägflächen der Klemmringe (38, 39) die Gegendruckhülse (24) durch Abstützung an der Innenseite der Mitnehmerhülse (26) unter Verengung des axialen Schlitzes satt und über mehrere Zentimeter axiale Länge um das Einsteckende (23) der Einsteckwelle (44) verspannbar ist.

9. Schnellkupplung nach einem der Ansprüche 1 bis 3 sowie 7 und 8, ***dadurch gekennzeichnet,* dass** die Klemm-Mittel aus einem oberen, im Querprofil keilförmigen Klemmring (38) und einem unteren, im Querprofil keilförmigen Klemmring (39) mit gegenläufig zu jener des oberen Klemmrings (38) gerichteten Klemmfläche bestehen, und diese Klemmringe (38, 39) oben und unten an einer radial nach innen auskragenden Schulter (45) einer Ringfeder (25) anliegen und die beiden Klemmringe (38, 39) unter Einschluss der Schulter (45) mittels mehrerer über den Umfang verteilter Spannschrauben (36) in axialer Richtung zueinander zusammenspannbar sind, sodass die Gegendruckhülse (24) mit ihrem mindestens einen axialen Schlitz durch Abstützung der Ringfeder (25) an der Innenseite der Mitnehmerhülse (26) unter Verengung des axialen Schlitzes satt und über mehrere Zentimeter axiale Länge um das Einsteckende (23) der Einsteckwelle verspannt.

10. Schnellkupplung nach einem der Ansprüche 1 bis 3 sowie 7 bis 9, ***dadurch gekennzeichnet,* dass** die Mitnehmerhülse (26) in ihrem unteren Abschnitt die Mitnehmerwelle (1; 57) des Bohrwerkzeuges umschliesst und in ihrer Innenseite eine Anzahl axial verlaufender, im Querschnitt halbkreisförmiger Ausnehmungen (40) aufweist, welchen Ausnehmungen ebensolche Ausnehmungen (41) in der Aussenseite der Mitnehmerwelle (1; 57) gegenüberliegen, wobei in den so gebildeten kreisförmigen Ausnehmungen Mitnehmerbolzen (3, 4; 28, 29) stecken, zur Übertragung des Drehmomentes von der Mitnehmerhülse (26) auf die Mitnehmerwelle (1; 57) und somit auf das Bohrwerkzeug, und weiter zwei auf gleicher Ebene liegende Sekantenbohrungen (55; 42) den Randbereich der Mitnehmerhülse (26) durchstossen und den äusseren Bereich der Mitnehmerwelle (1; 57) anschneiden, zur axialen Sicherung der Mitnehmerwelle (1; 57) in der Mitnehmerhülse (26).

11. Schnellkupplung nach einem der Ansprüche 7 bis 10, ***dadurch gekennzeichnet,* dass** die Befestigungsbolzen (27) in den Sekantenbohrungen (42) mittels je eines radial von aussen auf sie gerichteten Sicherungsbolzens (33) gesichert sind, der am Ende in seinem Zentrum eine federbelastete Kugel (34) aufweist, die in eine Kreisnut (34) in der Mitte der Befestigungsbolzen (27) einrastbar ist.

12. Schnellkupplung nach Anspruch 11, ***dadurch gekennzeichnet,* dass** die Sicherungsbolzen (33) mittels je einer Radial-Wellendichtung (43), das heisst eines Simmerringes (43), in ihren Bohrungen (35) gesichert sind.

13. Schnellkupplung nach einem der Ansprüche 1 bis 3 sowie 7 und 12, ***dadurch gekennzeichnet,* dass** die Befestigungsbolzen (27) an beiden Enden einen nach aussen zulaufenden Kegelstumpf (46) bilden, zur leichteren Einführbarkeit in die Sekantenbohrungen (42).

## Claims

1. Quick coupling for a rotating and simultaneously striking tool of a drive device, with an insertion shaft (44), wherein a lower insertion end (23) of the insertion shaft (44) of the drive device can be screwed torque-lockingly to a driver sleeve (26) either by means of a direct threaded connection (14) or can be braced by means of clamping means (38, 39), ***characterised in* that** the driver sleeve (26) is connected torque-lockingly to a driver shaft (1; 57) by means of axially extending driver bolts (3, 4; 28, 29), and wherein two secant bores (55; 42) lying at the same level penetrate the edge region of the driver sleeve (26) and cut into the outer region of the driver shaft (1; 57), and a fastening bolt (6; 27) can be inserted into each of these secant bores (55; 42) for axially securing the driver shaft (1; 57) in the driver sleeve (26).

2. Quick coupling according to claim 1, ***characterised in* that** half of the cross-section of the axially extending driver bolts (3, 4; 28, 29) lies in axial recesses (20; 40) in the inside of the driver sleeve (26) and half of their cross-section lies in the same recesses (21; 41) in the outside of a driver shaft (1; 57).

3. Quick coupling according to one of the preceding claims, ***characterised in* that** the insert shaft rests directly or the driver sleeve (26) rests on the driver shaft (1, 57) with a contact surface which is flat at the bottom as an impact surface (53; 49), for the direct transmission of impact lengths of the insert shaft to the driver shaft (1, 57) and thus to the drill pipe screwed to the driver shaft (1).

4. Quick coupling according to one of the preceding claims, ***characterised in that*** a liquid-tight flushing ring (9) is placed on the upper section of the driver sleeve (26) so that it remains stationary when the driver sleeve (26) is rotated, and **in that** flushing liquid can be fed through this flushing ring (9) via a flushing connection (50, 51) from the outside to its inside and there into a channel (52) surrounding it on the inside, from which channel (52) the flushing fluid is guided through bores (56, 57) into an axial inner flushing bore (31) in the driver sleeve (26) and the driver shaft (1).

5. Quick coupling according to claim 4, ***characterised in* that** the flushing ring (9) rests at the bottom and top on a plurality of sliding rings.

6. Quick coupling according to claim 4, ***characterised in* that** the flushing ring (9) rests below and above on a plurality of sliding rings, namely below the flushing ring (9) from top to bottom on a clamping ring (16), an upper sliding ring (17), a middle sliding ring (18) and a lower sliding ring (19), and **in that** it is secured at the top from top to bottom by means of a locking ring (8), and a steel ring (13) is installed below it, a centre sliding ring (18) and a lower sliding ring (19), and that it is secured at the top from top to bottom by means of a retaining ring (8), and a steel ring (13) is installed below the latter, followed by a plastic ring (12) and then a rubber ring (11) and then a set of seals (10).

7. Quick coupling according to one of claims 1 to 3, ***characterised in* that** the lower insertion end (23) of the insertion shaft (44) of the drive unit can be clamped to an inner side of the driver sleeve (26) extending around this insertion end (23) by means of clamping means (38, 39), and the driver sleeve (26) is connected to the driver shaft (57) in a torque-locking manner by means of axially extending driver bolts (28, 29), and wherein two secant bores (42) lying at the same level penetrate the edge region of the driver sleeve (26) and cut into the outer region of the driver shaft (57), and a fastening bolt (27) can be inserted into each of these secant bores (42) for axially securing the driver shaft (57) in the driver sleeve (26).

8. Quick coupling according to one of claims 1 to 3 and 7, ***characterised in* that** the lower insertion end (23) of the insertion shaft (44) of the drilling device can be clamped to an inner side of the driver sleeve (26) extending around this insertion end (23) by means of clamping means (38, 39), **in that** the insertion end (23) projects centrally into the driver sleeve (26), leaving a hollow cylinder free, and this insertion shaft (44) is tightly enclosed by a counter-pressure sleeve (24) with at least one axial slot, and wedge-shaped clamping rings (38, 39) are inserted between the outside of the counter-pressure sleeve (24) and the inside of the driver sleeve (26) in the transverse profile as clamping means, with the tensioning of which, by displacing the cutting surfaces of the clamping rings (38, 39), the counter-pressure sleeve (24) can be clamped tightly and over an axial length of several centimetres around the insertion end (23) of the insertion shaft (44) by supporting it on the inside of the driver sleeve (26) while narrowing the axial slot.

9. Quick coupling according to one of claims 1 to 3 and 7 and 8, ***characterised in* that** the clamping means consist of an upper clamping ring (38), which is wedge-shaped in the transverse profile, and a lower clamping ring (39), which is wedge-shaped in the transverse profile and has a clamping surface directed in the opposite direction to that of the upper clamping ring (38), and these clamping rings (38, 39) bear at the top and bottom against a radially inwardly projecting shoulder (45) of an annular spring (25) and the two clamping rings (38, 39), including the shoulder (45), can be clamped together in the axial direction relative to one another by means of a plurality of clamping screws (36) distributed over the circumference, so that the counter-pressure sleeve (24) with its at least one axial slot is clamped tightly and over an axial length of several centimetres around the insertion end (23) of the insertion shaft by supporting the annular spring (25) on the inside of the driver sleeve (26) while narrowing the axial slot.

10. Quick coupling according to one of claims 1 to 3 and 7 to 9, ***characterised in* that** the driver sleeve (26) encloses the driver shaft (1; 57) of the drilling tool in its lower section and has a number of axially extending recesses (40) of semicircular cross-section in its inner side, which recesses are opposed by similar recesses (41) in the outer side of the driver shaft (1; 57), wherein driver bolts (3, 4; 28, 29) are inserted in the circular recesses thus formed, for transmitting the torque from the driver sleeve (26) to the driver shaft (1; 57) and thus to the drilling tool, and furthermore two secant bores (55; 42) lying at the same level penetrate the edge region of the driver sleeve (26) and cut into the outer region of the driver shaft (1; 57), for axially securing the driver shaft (1; 57) in the driver sleeve (26).

11. Quick-release coupling according to one of claims 7 to 10, ***characterised in* that** the fastening bolts (27) are each secured in the secant bores (42) by means of a securing bolt (33) which is directed radially towards them from the outside and which has a spring-loaded ball (34) at its end in its centre, which ball can be latched into a circular groove (34) in the centre of the fastening bolts (27).

12. Quick coupling according to claim 11, ***characterised in* that** the locking bolts (33) are each secured in their bores (35) by means of a radial shaft seal (43), i.e. a radial shaft seal (43).

13. Quick coupling according to one of claims 1 to 3 and 7 and 12, ***characterised in* that** the fastening bolts (27) form an outwardly tapering truncated cone (46) at both ends for easier insertion into the secant bores (42).

## Revendications

1. Accouplement rapide pour un outil rotatif et simultanément percutant d'un appareil d'entraînement, avec un arbre d'emboîtement (44), une extrémité d'emboîtement inférieure (23) de l'arbre d'emboîtement (44) de l'appareil d'entraînement pouvant être vissée avec un couple de rotation avec une douille d'entraînement (26), soit au moyen d'un raccord fileté direct (14), soit par serrage à l'aide de moyens de serrage (38, 39), ***caractérisé en* ce que** la douille d'entraînement (26) peut être serrée au moyen de boulons d'entraînement (3, 4; 28, 29) à un arbre d'entraînement (1 ; 57), et deux alésages sécants (55; 42) situés au même niveau traversant la zone de bordure de la douille d'entraînement (26) et coupant la zone extérieure de l'arbre d'entraînement (1 ; 57), et un boulon de fixation (6; 27) pouvant être inséré dans chacun de ces alésages sécants (55; 42), pour la fixation axiale de l'arbre d'entraînement (1 ; 57) dans la douille d'entraînement (26).

2. Accouplement rapide selon la revendication 1, ***caractérisé en* ce que** les boulons d' entraînement (3, 4; 28, 29) s'étendant axialement se trouvent pour la moitié de leur section transversale dans des évidements axiaux (20; 40) dans la face intérieure de la douille d' entraînement (26) et pour la moitié de leur section transversale dans des évidements (21 ; 41) de même nature dans la face extérieure d'un arbre d' entraînement (1 ; 57).

3. Raccord rapide selon l'une des revendications précédentes, ***caractérisé en* ce que** l'arbre d'emboîtement repose directement ou la douille d'entraînement (26) repose avec une surface d'appui plane en bas comme surface de frappe (53; 49) sur l'arbre d'entraînement (1, 57), pour la transmission directe de longueurs de battage de l'arbre d'emboîtement sur l'arbre d'entraînement (1, 57) et ainsi sur le tube de forage vissé sur l'arbre d'entraînement (1).

4. Raccord rapide selon l'une des revendications précédentes, ***caractérisé en* ce qu'**une bague de rinçage (9) étanche au liquide est placée sur la partie supérieure de la douille d'entraînement (26), de sorte que celle-ci reste stationnaire lors de la rotation de la douille d'entraînement (26), et **en ce que** cette bague de rinçage (9) permet, par un raccord de rinçage (50, 51), du liquide de rinçage peut être acheminé de l'extérieur vers sa face intérieure et là dans un canal (52) qui l'entoure intérieurement, canal (52) à partir duquel le liquide de rinçage est acheminé par des alésages (56, 57) dans un alésage de rinçage (31) axial intérieur dans la douille d'entraînement (26) et l'arbre d'entraînement (1).

5. Raccord rapide selon la revendication 4, ***caractérisé en* ce que** l'anneau de rinçage (9) repose en bas et en haut sur une pluralité d'anneaux de glissement.

6. Raccord rapide selon la revendication 4, ***caractérisé en* ce que** la bague de rinçage (9) repose en bas et en haut sur une pluralité de bagues de glissement, à savoir en dessous de la bague de rinçage (9) de haut en bas sur une bague de serrage (16), une bague de glissement supérieure (17), une bague de glissement médiane (18) et une bague de glissement inférieure (19), et **en ce qu'**il est bloqué en haut de haut en bas au moyen d'une bague de blocage (8), et **en ce que**, en dessous de celle-ci, une bague en acier (13) est montée, suivie d'une bague en plastique (12), puis d'une bague en caoutchouc (11), puis d'un jeu de joints (10).

7. Accouplement rapide selon l'une des revendications 1 à 3, ***caractérisé* en ce que** l'extrémité d'insertion inférieure (23) de l'arbre d'insertion (44) de l'appareil d'entraînement peut être serrée à l'aide de moyens de serrage (38, 39) avec une face intérieure de la douille d'entraînement (26) s'étendant autour de cette extrémité d'insertion (23), et la douille d'entraînement (26) est serrée à l'aide de boulons d'entraînement s'étendant axialement (28, 29) à l'arbre d'entraînement (57), et deux alésages sécants (42) situés au même niveau traversant la zone de bordure de la douille d'entraînement (26) et coupant la zone extérieure de l'arbre d'entraînement (57), et un boulon de fixation (27) pouvant être inséré dans chacun de ces alésages sécants (42), pour la fixation axiale de l'arbre d'entraînement (57) dans la douille d'entraînement (26).

8. Raccord rapide selon l'une des revendications 1 à 3 ainsi que 7, ***caractérisé en* ce que** l'extrémité d'insertion inférieure (23) de l'arbre d'insertion (44) de l'appareil de forage est reliée à une face intérieure de la douille d'entraînement (26) s'étendant autour de cette extrémité d'insertion (23) par des moyens de serrage (38, 39), **en ce que** l'extrémité d'insertion (23) pénètre au centre dans la douille d'entraînement (26) en laissant libre un cylindre creux, et cet arbre d'insertion (44) est entouré à plat par une douille de contre-pression (24) comportant au moins une fente axiale, et entre le côté extérieur de la douille de contre-pression (24) et le côté intérieur de la douille d'entraînement (26), des bagues de serrage (38, 39) en forme de coin sont insérées dans le profil transversal comme moyens de serrage, avec le serrage desquels, par déplacement des surfaces obliques des bagues de serrage (38, 39), la douille de contre-pression (24) peut être serrée à fond et sur plusieurs centimètres de longueur axiale autour de l'extrémité d'insertion (23) de l'arbre d'insertion (44) en s'appuyant sur la face intérieure de la douille d'entraînement (26) et en rétrécissant la fente axiale.

9. Raccord rapide selon l'une des revendications 1 à 3 ainsi que 7 et 8, ***caractérisé* en ce que** les moyens de serrage se composent d'une bague de serrage supérieure (38) en forme de coin dans le profil transversal et d'une bague de serrage inférieure (39) en forme de coin dans le profil transversal avec une surface de serrage orientée en sens inverse de celle de la bague de serrage supérieure (38), et ces bagues de serrage (38, 39) s'appliquent en haut et en bas contre un épaulement (45) d'un ressort annulaire (25) faisant saillie radialement vers l'intérieur et les deux bagues de serrage (38, 39) peuvent être serrées ensemble en direction axiale l'une par rapport à l'autre, en incluant l'épaulement (45), au moyen de plusieurs vis de serrage (36) réparties sur la périphérie, de sorte que la douille de contre-pression (24) avec sa au moins une fente axiale est serrée à plat et sur plusieurs centimètres de longueur axiale autour de l'extrémité d'insertion (23) de l'arbre d'insertion, par appui du ressort annulaire (25) sur le côté intérieur de la douille d'entraînement (26), avec rétrécissement de la fente axiale.

10. Accouplement rapide selon l'une des revendications 1 à 3 et 7 à 9, ***caractérisé en* ce que** la douille d'entraînement (26) entoure dans sa partie inférieure l'arbre d'entraînement (1 ; 57) de l'outil de forage et présente dans sa face intérieure un certain nombre d'évidements (40) de section semi-circulaire s'étendant axialement, évidements auxquels correspondent des évidements (41) de même type dans la face extérieure de l'arbre d'entraînement (1 ; 57), des boulons d'entraînement (3, 4 ; 28, 29) étant insérés dans les évidements circulaires ainsi formés pour transmettre le couple de rotation de la douille d'entraînement (26) à l'arbre d'entraînement (1 ; 57) et ainsi à l'outil de perçage, et en outre deux perçages sécants (55; 42) situés au même niveau traversent la zone de bordure de la douille d'entraînement (26) et entament la zone extérieure de l'arbre d'entraînement (1 ; 57), pour le blocage axial de l'arbre d'entraînement (1 ; 57) dans la douille d'entraînement (26).

11. Raccord rapide selon l'une des revendications 7 à 10, ***caractérisé en* ce que** les boulons de fixation (27) sont bloqués dans les alésages sécants (42) au moyen d'un boulon de sécurité (33) respectif dirigé radialement de l'extérieur vers eux, qui présente à son extrémité, en son centre, une bille (34) sollicitée par un ressort, qui peut s'enclencher dans une rainure circulaire (34) au centre des boulons de fixation (27).

12. Raccord rapide selon la revendication 11, ***caractérisé en* ce que** les boulons de sécurité (33) sont bloqués chacun dans leurs alésages (35) au moyen d'un joint d'arbre radial (43), c'est-à-dire d'une bague Simmerring (43).

13. Raccord rapide selon l'une des revendications 1 à 3 ainsi que 7 et 12, ***caractérisé en* ce que** les boulons de fixation (27) forment aux deux extrémités un cône tronqué (46) se terminant vers l'extérieur, pour faciliter l'introduction dans les alésages sécants (42).
